# EUROPEAN PATENT SPECIFICATION

(11) **EP 0 661 189 B1**
(45) Date of publication and mention of the grant of the patent: **29.09.1999**
(21) Application number: 94119786.5
(22) Date of filing: 14.12.1994
(51) Int. Cl.: B60M 3/00, H02H 3/02

(54) **DC Power supply circuit**
Gleichstromversorgungseinrichtung
Circuit d'alimentation en courant continu

(30) Priority: 28.12.1993 JP 33491793
(43) Date of publication of application: 05.07.1995
(73) Proprietor: Hitachi, Ltd., Chiyoda-ku, Tokyo 101 (JP)
(72) Inventor: Hosoda, Minoru, Hitachi-shi, Ibaraki 316 (JP); Yoshida, Toru, Hitachi-shi, Ibaraki 316 (JP); Ouchi, Shigetoshi, Hitachi-shi, Ibaraki 317 (JP); Honda, Haruo, Hitachi-shi, Ibaraki 316 (JP); Fujita, Yasunobu, Hitachi-shi, Ibaraki 316 (JP); Ichikawa, Fumihisa, Hitachi-shi, Ibaraki 316 (JP); Yamada, Kouya, Hitachi-shi, Ibaraki 316 (JP)
(74) Representative: Strehl Schübel-Hopf & Partner

(56) References cited:
- EP-A- 0 474 186
- EP-A- 0 529 750
- GB-A- 2 090 488
- US-A- 3 529 210
- PATENT ABSTRACTS OF JAPAN vol. 13, no. 6 (M-781) 9 January 1989 & JP-A-63 219 430 (TOSHIBA) 13 September 1988
- PATENT ABSTRACTS OF JAPAN vol. 12, no. 400 (M-756) 24 October 1988 & JP-A-63 145 140 (MITSUBISHI ELECTRIC) 17 June 1988

## Description

### BACKGROUND OF THE INVENTION

### FIELD OF THE INDUSTRIAL UTILIZATION

The invention relates to a dc power supply circuit improved on a return circuit thereof.

### DESCRIPTION OF PRIOR ARTS

A conventional dc power supply circuit such as a feeder circuit disclosed in JP A 56-124520 is constructed in a looped power supply circuit, connecting a plurality of dc circuit breakers to a plurality of diodes, and connected again to rectifiers of the diodes through an electric railcar in contact with a feeder connected to each dc circuit breaker and rails.

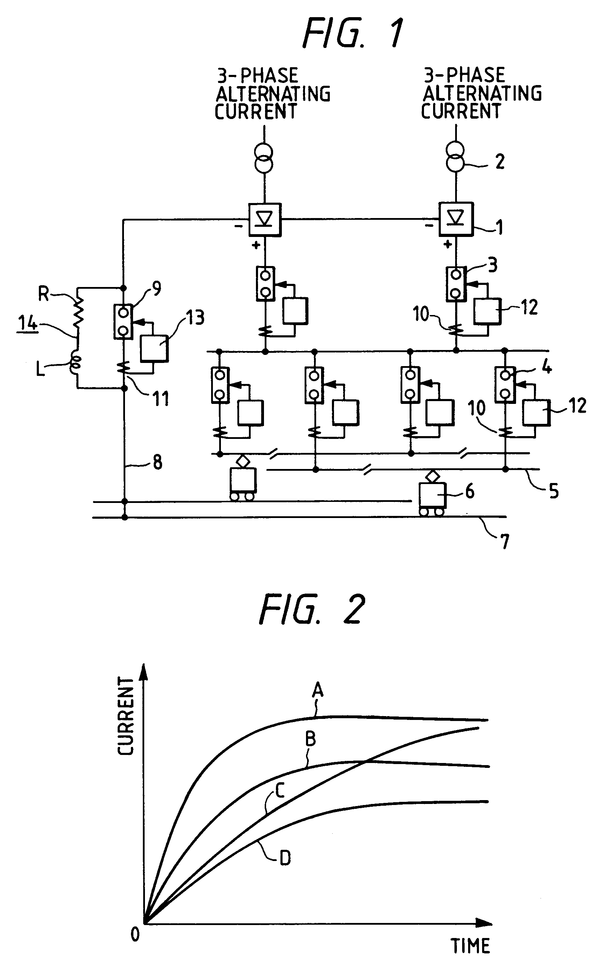

By the way, in recent years semi-conductor elements such as diodes, thyristors, etc. are improved remarkably in performance thereof, and as they are being made lower in loss and larger in capacity, an accident current flows instantaneously when a short circuit accident occurs in a dc power supply circuit, for instance. The accident current comes to a characteristic curve A as shown in Fig. 2, and it is remarkably larger than an interruption current B of a dc circuit breaker.

As a result, it is impossible to interrupt the current without use of a dc circuit breaker of large interruption capacity, and such a problem has appeared as the dc circuit breaker is not only made larger but in an existing dc power supply circuit it is necessary to be replaced by a dc circuit breaker of large capacity.

EP-A-0 474 186 discloses a power supply circuit with the features included in the first part of claim 1. The document is concerned with an ac system and aims at reducing the actuation delay of a consumer side circuit breaker in case of failure in a consumer sub-system.

### SUMMARY OF THE INVENTION

An object of the present invention is to make a dc power supply circuit small and to adapt an existing dc power supply circuit to fast responding semiconductor converters.

In accordance with the present invention, this object is met by a dc power supply circuits defined in claim 1.

Since an accidental current is interrupted by the second dc circuit breaker disposed in the return line and, after having been decreased by the current decreasing means, is interrupted by the respective first dc circuit breaker, dc circuit breakers of small capacity can be used for the plurality of first dc circuit breakers so that the overall dc power supply circuit may be small in size. Further, existing dc power supply circuits may be readily adapted to modern semi-conductor converters by inserting a single second dc circuit breaker in the return line.

### BRIEF DESCRIPTION OF THE DRAWINGS

Fig. 1 is a circuit diagram of a dc power supply circuit shown as an embodiment of the present invention; and
Fig. 2 is characteristic diagram of accident currents flowing in the circuit in Fig. 1.

### DESCRIPTION OF EMBODIMENTS OF THE INVENTION

An embodiment of the present invention is explained hereunder referring to a dc power supply circuit for electric railcars shown in Fig. 1.

The dc power supply circuit for electric railcars is constructed as a loop circuit from positive polarity sides of rectifiers such as a plurality of diodes 1 until negative polarity sides of the diodes 1 through dc circuit breakers 3, 4, etc. The diodes 1 are connected to the secondary sides of transformers 2, respectively and a power source side of each of the transformers 2 is connected to a three phase alternating current. The positive polarity side of each diode 1 is connected to the dc circuit breaker 3 for power source and the dc circuit breaker 4 for feeder in series. Each dc circuit breaker 4 for feeder is connected to cable 5, and current in the cable 5 flows into a rail 7 through a pantograph and wheels of an electric railcar 6. The rail 7 is connected to the negative polarity side of the diode 1 through a return circuit 8 of the cable (a negative polarity side circuit).

A second dc circuit breaker 9 is connected to the return circuit 8, and has larger capacity than the dc circuit breaker 3 for electric source and the dc circuit breaker 4 for feeder. Transformers 10, 11, each of which is connected to the dc power supply circuit for each of the dc circuit breakers 3, 4, 9, are connected to overcurrent relays 12, 13, respectively, in parallel with each dc circuit breaker 3, 4, 9.

The overcurrent relays 12 and 13 operate when set values thereof are at characteristic curves B-D, and A, respectively. Fig. 2 is characteristic diagram A-D showing relationships between accident current at an ordinate and interruption time at an abscissa. The overcurrent relays 12 operate at the characteristic curves B-D, that is, at the accident current to open the dc circuit breakers 3 for power source and dc circuit breakers 4 for feeder. Further, the overcurrent relays 13 operate at the characteristic curve A, that is, at accident current to open the second dc circuit breaker 9. In the other words, the overcurrent relay 13 operates when the relationship of di/dt of the accident current A > di/dt of the accident current B-D, and the overcurrent relays 12 operate when the relationship is contrary to the above relationship. Namely, whether the accident current is before it passes the current decreasing means 14 or after it has passed the means 14 determines whether the dc circuit breaker 9 is interrupted or the dc circuit breakers 3, 4 are interrupted.

Further, the second dc circuit breaker 9 is connected to the means 14 for decreasing current in parallel with it, for example, to a reactor L connected to resistor R in series. As other means for decreasing current, any one of the resistor R and the reactor L can be used.

In the circuit shown in Fig. 1, for example, when accident current occurs due to a short circuit accident of the electric railcar 6 and the accident current A in Fig. 2 flows in the dc power supply circuit for electric railcars, the accident current A is detected by the transformer 11, the overcurrent relay 13 is operated, the second dc circuit breaker 9 is opened, the accident current A flows into the means 14 for decreasing current to be decreased to accident current D in Fig. 2, and the accident current D flows. Further, when only the reactor L or only the resistor R is used, it is decreased to accident current C or accident current B and flows.

As the result, since the dc circuit breaker 3 for power source and the dc circuit breaker 4 for feeder become able to interrupt the accident current D, the dc circuit breaker 3 for power source and the dc circuit breaker 4 for feeder are sufficient to be small in interruption capacity as compared with the second dc circuit breaker 9, an existing dc circuit breaker 3 for power source and an existing dc circuit breaker 4 for feeder can be used as well as the dc power supply circuit for electric railcars can be made small in size, which is economical.

As another embodiment of the present invention, it can be used in a dc motor of a dc power supply circuit used in a rolling mill.

As mentioned above, according to the dc power supply circuit of the present invention, when an accident current is detected, the second dc circuit breaker is opened, and the accident current is made it possible to interrupt by the dc circuit breaker for power source and the dc circuit breaker for feeder after the accident current flowed into the current decreasing means to decrease, so that there are such advantages that the dc circuit breaker for power source and the dc circuit breaker for feeder are sufficient to be small in interruption capacity as compared with the second dc circuit breaker, and an existing dc circuit breaker 3 for power source and existing dc circuit breaker 4 for feeder can be used as well as the dc power supply circuit for electric railcars can be made small in size.

## Claims

1. A power supply circuit comprising
a plurality of first circuit breakers (3, 4) connecting a plurality of consumers (6) to a supply (1, 2),
a second circuit breaker (9) of larger interruption capacity than the first circuit breakers (3, 4),
current decreasing means (14) connected in parallel with said second circuit breaker (9), and
a return line (8) connecting said consumers (6) back to said supply (1, 2),
**characterised** in
that said first circuit breakers include a plurality of power source circuit breakers (3) each connected to a supply (1, 2) and a plurality of feeder circuit breakers (4) each connected between said plurality of power source circuit breakers (3) and said consumers (6),
that each supply (1, 2) includes a rectifier (1),
that said second circuit breaker (9) is disposed in said return line (8), and
that said second circuit breaker (9) has an interruption capacity larger than that of both said power source circuit breaker (3) and said feeder circuit breaker (4).

2. The circuit of claim 1, wherein said current decreasing means (14) includes a resistor (R) and/or a reactor (L).

3. The circuit of claim 1 or 2, wherein said consumers (6) include dc motors of electric railway cars or drives of a rolling mill.

## Patentansprüche

1. Stromversorgungsschaltung mit
mehreren ersten Unterbrechern (3, 4), über die mehrere Verbraucher (6) an eine Versorgung (1, 2) angeschlossen sind,
einem zweiten Unterbrecher (9) mit gegenüber den ersten Unterbrechern (3, 4) höherer Schaltleistung,
einer zu dem zweiten Unterbrecher (9) parallel liegenden Stromverringerungseinrichtung (14) und
einer die Verbraucher (6) wieder mit der Versorgung (1, 2) verbindenden Rückleitung (8),
dadurch **gekennzeichnet**,
daß die ersten Unterbrecher mehrere jeweils an eine Versorgung (1, 2) angeschlossene Stromquellen-Unterbrecher (3) und mehrere jeweils zwischen den Stromquellen-Unterbrechern (3) und den Verbrauchern (6) liegende Speiseleitungs-Unterbrecher (4) aufweisen,
daß jede Versorgung (1, 2) einen Gleichrichter (1) enthält,
daß der zweite Unterbrecher (9) in der Rückführleitung (8) liegt, und
daß der zweite Unterbrecher (9) eine höhere Schaltleistung aufweist als sowohl der Stromquellen-Unterbrecher (3) wie auch der Speiseleitungs-Unterbrecher (4).

2. Schaltung nach Anspruch 1, wobei die Stromverringerungseinrichtung (14) einen Widerstand (R) und/oder eine Drossel (L) enthält.

3. Schaltung nach Anspruch 1 oder 2, wobei zu den Verbrauchern (6) Gleichstrommotoren elektrischer Schienenfahrzeuge oder Walzwerksantriebe gehören.

## Revendications

1. Circuit d'alimentation en courant, comprenant
une pluralité de premiers disjoncteurs (3, 4) connectant une pluralité de consommateurs (6) à une source d'alimentation (1, 2),
un deuxième disjoncteur (9) à capacité d'interruption plus grande que celle des premiers disjoncteurs (3, 4),
un moyen (14) de réduction d'intensité montés en parallèle avec ledit deuxième disjoncteur (9), et
une ligne de retour (8) reconnectant lesdits consommateurs (6) à ladite source d'alimentation (1, 2),
**caractérisé** en ce que
lesdits premiers disjoncteurs comportent une pluralité de disjoncteurs (3) de sources de courant connectés chacun à une source d'alimentation (1, 2) et une pluralité de disjoncteurs (4) de lignes d'alimentation montés chacun entre ladite pluralité de disjoncteurs (3) de sources de courant et lesdits consommateurs (6),
chaque source d'alimentation (1, 2) comporte un redresseur (1),
ledit deuxième disjoncteur (9) est disposé dans ladite ligne de retour (8), et
ledit deuxième disjoncteur (9) a une capacité d'interruption supérieure à celle dudit disjoncteur (3) de source de courant et dudit disjoncteur (4) de ligne d'alimentation.

2. Circuit selon la revendication 1, dans lequel ledit moyen (14) de réduction d'intensité comprend une résistance (R) et/ou un composant à réactance (L).

3. Circuit selon la revendication 1 ou 2, dans lequel lesdits consommateurs (6) comprennent des moteurs à courant continu de voitures électriques de chemins de fer ou d'entraînement d'un laminoir.
